# EUROPEAN PATENT APPLICATION

(11) **EP 4 790 512 A1**
(43) Date of publication of application: **12.08.2026**
(21) Application number: 25869633.5
(22) Date of filing: 26.11.2025
(51) Int. Cl.: G05D 27/02

(54) **GREENHOUSE ENVIRONMENT COORDINATED REGULATION AND CONTROL METHOD AND SYSTEM, AND ELECTRONIC DEVICE**

(30) Priority: 16.12.2024 CN 202411853769; 24.02.2025 CN 202510200726
(71) Applicant: Jiangsu Academy of Agricultural Sciences, Nanjing, Jiangsu 210014 (CN)
(72) Inventor: REN, Ni, Nanjing, Jiangsu 210014 (CN); MAO, Xiaojuan, Nanjing, Jiangsu 210014 (CN); LU, Xinyu, Nanjing, Jiangsu 210014 (CN); ZHANG, Bingyuan, Nanjing, Jiangsu 210014 (CN); LU, Hongyu, Nanjing, Jiangsu 210014 (CN); WANG, Jianqiang, Nanjing, Jiangsu 210014 (CN); JIN, Jing, Nanjing, Jiangsu 210014 (CN)
(74) Representative: Santarelli
(86) International application number: PCT/CN2025/137897
(87) International publication number: WO 2026/130062

(57) **Abstract**

A method for coordinated regulation of greenhouse environment, applied to a system for coordinated regulation of greenhouse environment, and an electronic device implementing the method for coordinated regulation of greenhouse environment. The method includes the following steps: collecting environmental data inside and outside the greenhouse, operational data of environmental regulation equipment, and crop physiological and ecological data to construct a dataset; constructing a dynamic variation prediction model of crop stem diameter based on the dataset; constructing a target optimization function based on the dynamic variation prediction model, an optimal variation range of stem diameter within a fixed period, and environmental factor constraints; obtaining target values for coordinated regulation of air environmental factors inside the greenhouse using a swarm optimization algorithm, and thus obtaining an operating strategy for the environmental regulation equipment.

## Description

This application claims priority to Chinese Patent Application No. 2024118537698, filed with the Chinese Patent Office on December 16, 2024, titled "Method and System for Coordinated Regulation of Greenhouse Environment Based on Crop Stem Diameter Variation", the contents of which are incorporated herein by reference in their entirety.

### Technical Field

This disclosure relates to the field of smart agriculture, and more specifically, to a method and system for coordinated regulation of greenhouse environment based on variation in crop stem diameter and an electronic device.

### Background of the Invention

Crop growth has strict requirements with respect to environmental conditions. Factors such as temperature and illumination within a greenhouse directly affect the growth rate of crops, fruit development, and final yield. In the related art, greenhouse environmental control methods are typically regulated manually based on experience, resulting in a low level of intelligence and a high degree of reliance on human expertise.

### Summary of the Invention

The present disclosure provides a novel technical solution for a method, system for coordinated regulation of greenhouse environment based on variation in crop stem diameter and an electronic device, which can, in greenhouse production, regulate in real time the operating states of environmental regulation equipment within the greenhouse according to variations in crop stem diameter so as to achieve environmental factor regulation objectives and improve the level of intelligence.

In a first aspect, the present disclosure provides a method for coordinated regulation of greenhouse environment based on crop stem diameter variation, comprising the following steps: collecting environmental data inside the greenhouse, environmental data outside the greenhouse, operational data of environmental regulation equipment, and crop physiological and ecological data to construct a dataset; constructing a dynamic variation prediction model of crop stem diameter based on the dataset; constructing a target optimization function based on the dynamic variation prediction model of stem diameter, an optimal variation range of stem diameter within a fixed period, and environmental factor constraints; and obtaining target values for coordinated regulation of air environmental factors inside the greenhouse by using a swarm optimization algorithm, thereby obtaining an operation strategy of the environmental regulation equipment.

Optionally, the dynamic variation prediction model of crop stem diameter is constructed by using an intelligent learning method that combines an improved SSA algorithm with Transformer-XL.

Optionally, the dynamic variation prediction model of crop stem diameter is a LightGBM-SSA-Transformer-XL model, and constructing the dynamic variation prediction model of crop stem diameter includes the following steps:
S1, dividing a sample dataset into multiple dataset types according to preset environmental change rules, and for each type, dividing the sample dataset into a training sample set and a testing sample set;
S2, performing feature extraction on input parameter variables of the training sample set by using a LightGBM algorithm, and screening for feature factors that affect the growth rate of crop stem diameter;
S3, constructing a Transformer-XL model based on the feature factors screened from the training sample set by the LightGBM algorithm, and optimizing hyperparameters of the Transformer-XL model by using an SSA algorithm to obtain the LightGBM-SSA-Transformer-XL model;
S4, selecting the feature factors screened from the testing sample set by the LightGBM algorithm, and testing the LightGBM-SSA-Transformer-XL model to obtain an optimal LightGBM-SSA-Transformer-XL model; and
S5, collecting, in real time, the environmental data inside the greenhouse, the environmental data outside the greenhouse, the operational data of environmental regulation equipment, and the crop physiological and ecological data, and inputting the collected data into the optimal LightGBM-SSA-Transformer-XL model to predict a future dynamic variation trend of crop stem diameter.

Optionally, in step S3, optimizing hyperparameters of the Transformer-XL model by using an SSA algorithm includes the following steps:
S31, initializing SSA parameters, including a population size and a maximum number of iterations;
S32, converting the hyperparameters of the Transformer-XL model into position coordinates of salps, and calculating a fitness value of each salp;
S33, sorting the fitness values of the salps, taking the position of an optimal salp as a position of a food source, designating the first a% of a salp chain as leaders and the remaining (100-a)% as followers, and updating positions of the salp leaders and the salp followers respectively, where a% is less than 50%;
S34, repeating steps S31 to S33 until the maximum number of iterations is reached, thereby obtaining optimal values of the number of encoder layers, batch size, and learning rate of the Transformer-XL model.

Optionally, the first 30% of the salp chain are designated as leaders and the remaining 70% as followers, and the positions of the salp leaders and the salp followers are updated respectively.

Optionally, in step S1, the sample dataset is divided into three dataset types based on seasonal changes and weather types: winter low-temperature high-humidity, summer high-temperature, and spring/autumn heat-preservation.

Optionally, the environmental data inside the greenhouse includes air temperature, air humidity, light intensity, photosynthetically active radiation, and carbon dioxide concentration; the environmental data outside the greenhouse includes outdoor air temperature, air humidity, photosynthetically active radiation, rainfall, and wind speed; the operational data of environmental regulation equipment includes equipment operation mode and operation time data; and the crop physiological and ecological data include leaf temperature, leaf humidity, and stem diameter variation data.

In a second aspect, the present disclosure provides a system for coordinated regulation of greenhouse environment based on variation in crop stem diameter, comprising: a data acquisition module, configured to collect environmental data inside the greenhouse, environmental data outside the greenhouse, operational data of environmental regulation equipment, and crop physiological and ecological data to construct a dataset; a cloud platform service module, including a stem diameter variation prediction module and an environmental factor coordinated regulation module, wherein the stem diameter variation prediction module constructs a dynamic variation prediction model of crop stem diameter based on the dataset, and the environmental factor coordinated regulation module constructs a target optimization function based on the dynamic variation prediction model of stem diameter, an optimal variation range of stem diameter within a fixed period, and environmental factor constraints, and obtains target values for coordinated regulation of air environmental factors inside the greenhouse using a swarm optimization algorithm, thereby obtaining an operation strategy for the environmental regulation equipment; and an equipment execution module, configured to send an execution instruction in real time to the regulation equipment based on the generated environmental regulation strategy.

In a third aspect, the present disclosure provides an electronic device, comprising a processor and a memory, wherein the memory stores computer program instructions which, when executed by the processor, cause the processor to perform the steps of the method described above.

In a fourth aspect, the present disclosure provides a computer-readable storage medium storing a computer program which, when executed by a processor, causes the processor to perform the steps of the above-mentioned method.

According to the embodiments of the present disclosure, the method for coordinated regulation of greenhouse environment based on variation in crop stem diameter constructs a target optimization function using the growth rate of crop stem diameter as the primary regulation indicator, thereby obtaining the regulation strategy for environment factors of greenhouse crop growth. This provides a reliable technical approach for control and management of the greenhouse crop growth environment.

Other features and advantages of the present disclosure will become apparent from the following detailed description of exemplary embodiments with reference to the accompanying drawings.

### Brief Description of the Drawings

The accompanying drawings, which are incorporated in and form a part of this specification, illustrate embodiments of the present disclosure and, together with the description, are used to explain the principles of the present disclosure.
FIG. 1 is a schematic diagram of the structure of a system for coordinated regulation of greenhouse environment according to an embodiment of the present disclosure;
FIG. 2 is a flowchart of a method for coordinated regulation of greenhouse environmental factors based on variation in crop stem diameter according to an embodiment of the present disclosure;
FIG. 3 is a flowchart of a variation prediction method of crop stem diameter according to an embodiment of the present disclosure;
FIG. 4 is a schematic diagram of an electronic device according to an embodiment of the present disclosure.

Reference signs are as follows:
electronic device 200;
processor 201;
memory 202; operating system 2021; application program 2022;
network interface 203;
input device 204;
hard drive 205;
display device 206.

### Detailed Description of Embodiments

Various exemplary embodiments of the present disclosure will be described in detail with reference to the accompanying drawings. It should be noted that, unless otherwise specifically stated, the relative arrangement, numerical expressions, and values of the components and steps set forth in these embodiments do not limit the scope of the present disclosure.

The following description of at least one exemplary embodiment is merely illustrative and is in no way intended to limit the present disclosure or its application or use.

Techniques, methods, and equipment known to those skilled in the art may not be discussed in detail, but where appropriate, such techniques, methods, and equipment should be considered part of the specification.

In all the examples shown and discussed herein, any specific values should be construed as merely exemplary and not as limiting. Therefore, other examples of exemplary embodiments may have different values.

It should be noted that similar numerals and letters in the following figures indicate similar items; therefore, once an item is defined in one figure, it does not need to be discussed further in subsequent figures.

The following describes, with reference to the accompanying drawings, a method for coordinated regulation of greenhouse environment based on variation in crop stem diameter, according to an embodiment of the present disclosure.

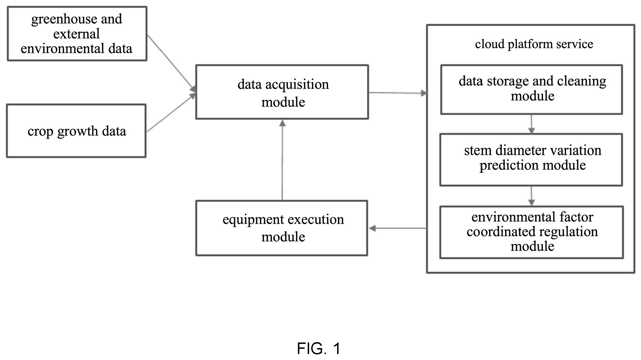

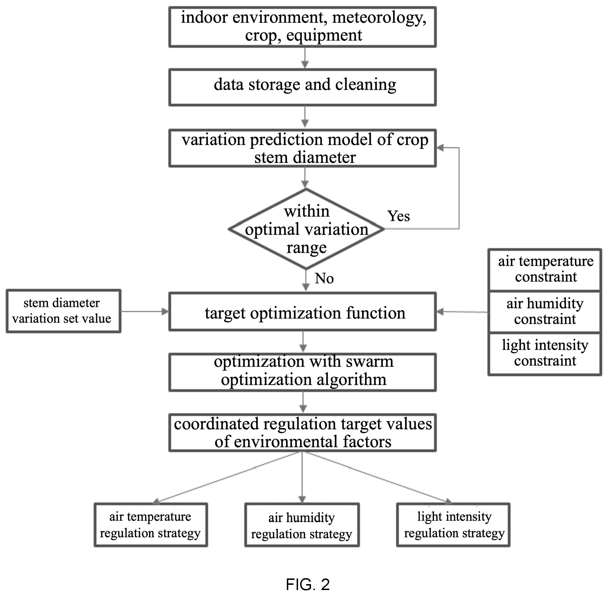

As shown in FIGS. 1 to 3, the method for coordinated regulation of greenhouse environment based on variation in crop stem diameter according to an embodiment of the present disclosure includes the following steps:
A dataset is constructed by collecting environmental data inside and outside the greenhouse, operational data of environmental regulation equipment, and crop physiological and ecological data. The environmental data inside and outside the greenhouse includes both environmental data inside the greenhouse and environmental data outside the greenhouse. The environmental data inside the greenhouse may be defined as greenhouse environmental factor data, for example, the environmental data inside the greenhouse include air temperature, air humidity, light intensity, photosynthetically active radiation, and carbon dioxide concentration. the environmental data outside the greenhouse may be defined as external environmental factor data or outdoor meteorological data, for example, the environmental data outside the greenhouse include outdoor air temperature, air humidity, photosynthetically active radiation, rainfall, and wind speed. The operational data of environmental regulation equipment may be defined as equipment operation data, for example, the operational data of environmental regulation equipment include equipment operation mode and operation time. The crop physiological and ecological data may be defined as crop growth data, for example, the crop physiological and ecological data include leaf temperature, leaf humidity, and stem diameter variation.

Optionally, data processing can be performed when constructing the dataset. For example, the collected data are transmitted to a cloud platform server for data processing such as outlier removal, data imputation, and normalization.

A dynamic variation prediction model of crop stem diameter is constructed based on the dataset; for example, an artificial intelligence algorithm is used to build the dynamic variation prediction model of crop stem diameter using the cleaned dataset.

A target optimization function is constructed based on the dynamic variation prediction model of stem diameter, an optimal variation range of stem diameter within a fixed period, and environmental factor constraints. Using a swarm optimization algorithm, coordinated regulation target values of air environmental factors inside the greenhouse are obtained, thereby obtaining an operation strategy for the environmental regulation equipment. In other words, using the micro-variations in stem diameter as the core regulation indicator, a target optimization function is constructed based on the dynamic variation prediction model of stem diameter, an optimal variation range of stem diameter within a fixed period, and environmental factor constraints. Coordinated regulation target values of greenhouse air environmental factors are obtained using a swarm optimization algorithm, thereby obtaining an operation strategy for the environmental regulation equipment.

Furthermore, in crop cultivation, stem diameter variation is one of the key indicators for assessing crop growth, and its monitoring method is convenient and non-destructive to crops. By monitoring slight variations in crop stem diameter in real time, the growth rate, growth trend, and physiological state of the plant can be reflected promptly, providing a scientific basis for environmental regulation. With breakthroughs in sensor and phenotypic monitoring technologies, it has become possible to use variation in crop stem diameter as a basis for regulating environmental factors inside greenhouses. Therefore, the present disclosure provides a method for coordinated regulation of the greenhouse environment based on variation in crop stem diameter, which is of great significance in ensuring that the greenhouse environment is always in the optimal state for crop growth. This method not only improves crop yield and quality but also promotes the sustainable development of agricultural production.

It should be noted that the method for coordinated regulation of the greenhouse environment based on variation in crop stem diameter according to the embodiment of the present disclosure may be applied to vines or climbing crops such as tomatoes, sweet peppers, and cucumbers.

Therefore, the method for coordinated regulation of the greenhouse environment based on variation in crop stem diameter according to the embodiments of the present disclosure constructs a target optimization function using crop stem diameter growth rate as the primary regulation indicator, thereby obtaining the regulation strategy for environment factors of greenhouse crop growth, which can provide a reliable technical approach for control and management of greenhouse crop growth environment.

Optionally, the target optimization function is constructed as follows: $\left\{\begin{matrix}minF \left(x\right) = \left|f\left(x\right)-{S}_{obj}\right| \\ f \left(x\right) = S \left(t, i, h\right) \\ {S}_{obj} = \frac{{S}_{max} - {S}_{min}}{2}\end{matrix}\right.$

The environmental constraints are as follows: $s . t . \left\{\begin{matrix}{t}_{min} \leq {t}_{aim} \leq {t}_{max} \\ {i}_{min} \leq {i}_{aim} \leq {i}_{max} \\ {h}_{min} \leq {h}_{aim} \leq {h}_{max}\end{matrix}\right.$

In equations (6) and (7), F(x) is the target optimization function; f(x) is the stem diameter variation prediction model function; S_{obj} is the optimal micro-variation set value of crop stem diameter within a specific period; Sₘₐₓ is the maximum stem diameter variation within a specific period; Sₘᵢₙ is the minimum stem diameter variation within a specific period; tₘᵢₙ is the minimum temperature; tₘₐₓ is the maximum temperature; tₐᵢₘ is the target value for temperature regulation; *iₐᵢₘ* is the target value for light regulation; hₐᵢₘ is the target value for humidity regulation; S(t,i,h) is the stem diameter variation prediction model function; and s.t. is the set of constraints.

In equations (6) and (7), the stem diameter variation prediction model function *f*(*x*), and the optimal micro-variation set value of crop stem diameter within a specific period *S_{obj}*, are organized into the target optimization function, *F*(*x*). The set range of stem diameter variation within a specific period (*Sₘᵢₙ*, *Sₘₐₓ*) is derived from production experience data of crop cultivation. The number of environmental factor constraints is consistent with the actual input parameters of the prediction model. Specifically, the target value for temperature regulation *tₐᵢₘ* must fall within a pre-set reasonable regulation range (*tₘᵢₙ*, *tₘₐₓ*); the target value for light regulation *iₐᵢₘ* must fall within a pre-set reasonable regulation range (*iₘᵢₙ*, *iₘₐₓ*); and the target value of humidity regulation h*ₐᵢₘ* must fall within a pre-set reasonable regulation range (h*ₘᵢₙ*, h*ₘₐₓ*).

Moreover, the optimization objective is to make the function asymptotically approach the optimal set value of stem diameter growth variation within a fixed time period while satisfying the constraints. The second-generation non-dominated sorting genetic algorithm (NSGA-II) is employed, and the results are verified based on the measured environmental and stem diameter variation data in the greenhouse. Finally, the greenhouse environment regulation strategy for the entire growth period of the crop is obtained.

According to one embodiment of the present disclosure, a dynamic variation prediction model for crop stem diameter is constructed using an intelligent learning method combining an improved SSA (Salp Swarm Algorithm) and Transformer-XL. That is, in this embodiment, the method for predicting crop stem diameter variation in a greenhouse employs an intelligent learning approach combining the improved SSA and Transformer-XL algorithm, and uses the combined model of the improved SSA and Transformer-XL to predict in real time the trend of crop stem diameter variations. The improved SSA algorithm may include a dynamically adaptive SSA algorithm.

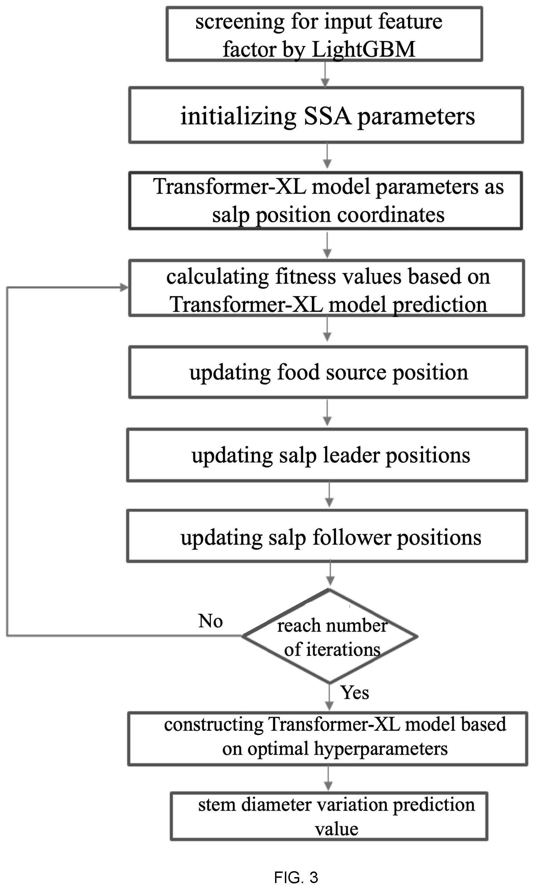

In some specific embodiments of the present disclosure, the dynamic variation prediction model of crop stem diameter is the LightGBM-SSA-Transformer-XL model, as shown in FIG. 3. The construction of the dynamic variation prediction model of crop stem diameter includes the following steps S1 to S5.

In step S1, the sample dataset is divided into multiple dataset types according to preset environmental change rules, and for each type, the data set is further divided into a training sample set and a testing sample set.

In step S2, feature extraction is performed on the input parameter variables of the training sample set using the LightGBM algorithm to screen for feature factors affecting the growth rate of crop stem diameter; that is, LightGBM is used to extract features from the input parameter variables. The LightGBM is a Light Gradient Boosting Machine (LightGBM) algorithm. In step S2, the LightGBM algorithm is used to obtain the feature importance of the input data, screen for the main feature factors affecting the growth rate of crop stem diameter, and thus improve the prediction accuracy and running speed of the model.

In step S3, a Transformer-XL model is constructed using the feature factors screened by the LightGBM algorithm from the training sample set, an improved SSA algorithm is used to optimize hyperparameters of the Transformer-XL model, resulting in the LightGBM-SSA-Transformer-XL model. In other words, a dynamic variation prediction model of crop stem diameter based on the Transformer-XL model is constructed using the training sample set. An improved Salp Swarm Algorithm (SSA) is used to optimize the hyperparameters of the Transformer-XL model, such as the number of encoder layers, batch size, and learning rate.

In step S3, the Transformer-XL is an improved method for the traditional Transformer model. This method introduces a recurrent mechanism and relative positional encoding, primarily optimized for long-sequence modeling. During training, Transformer-XL processes the sequence segment by segment, avoiding the sharp increase in computational complexity of global self-attention as the sequence length grows. Moreover, the traditional Transformer model uses absolute positional encoding to compute attention scores, which makes it unable to adapt to variation in relative distance between different positions, thereby making it difficult to capture long-term dependencies in time series. In this embodiment, the Transformer-XL used employs relative positional encoding, effectively solving the above problems.

In addition, the Salp Swarm Algorithm used in step S3 is a novel swarm intelligence optimization algorithm. Its concept originates from the aggregation behavior of salps, specifically the salp chain. In SSA, the salp chain consists of two types of salps: leaders and followers. The leader is located at the front of the salp chain, while the other individuals act as followers.

The Salp Swarm Algorithm is described in detail below.

First, in the algorithm, the position of the food source is the target position for all salp individuals, and the position update formula for the leader is: ${X}_{j}^{i} \left(t\right) = \left\{\begin{matrix}{F}_{j} + {c}_{1} \left(\left({ub}_{j}-{lb}_{j}\right){c}_{2}+{lb}_{j}\right) , {c}_{3} \geq 0.5 \\ {F}_{j} - {c}_{1} \left(\left({ub}_{j}-{lb}_{j}\right){c}_{2}+{lb}_{j}\right) , {c}_{3} < 0.5\end{matrix}\right.$ where t is the current iteration number; ${X}_{j}^{i} \left(t\right)$ is the position of the current salp leader in the j-th dimension; *Fⱼ* is the position of the food source in the j-th dimension; *ubⱼ* and *lbⱼ* are the upper and lower bounds of the j-th dimension, respectively; *c*₂ and *c*₃ are random numbers uniformly distributed between (0, 1); *Tₘₐₓ* is the maximum iteration number; and *c*₁ adaptively decreases as the iteration number increases, with a value given by: ${c}_{1} = 2 {e}^{- {\left(4t/{T}_{max}\right)}^{2}}$

Second, the position update formula for the followers is: ${X}_{j}^{i} \left(t\right) = \frac{1}{2} \left({X}_{j}^{i}\left(t-1\right)+{X}_{j}^{i - 1}\left(t-1\right)\right)$ where ${X}_{j}^{i} \left(t-1\right)$ and ${X}_{j}^{i - 1} \left(t-1\right)$ are the positions of the i-th and *(i* - 1)-th salp followers in the j-th dimension from the previous generation, respectively.

To better balance the exploration and exploitation capabilities of the Salp Swarm Algorithm and avoid falling into a local optimum, the present disclosure proposes a dynamic adaptive weighting method. This method enhances the exploration capabilities of followers in the early stages of the search process and improves their exploitation capabilities in the later stages. The improvements of the algorithm are shown in the following formula: ${X}_{j}^{i} \left(t\right) = \frac{1}{2} \left({X}_{j}^{i}\left(t-1\right)+w\left(t\right){X}_{j}^{i - 1}\left(t-1\right)\right)$ $w \left(t\right) = 1 - sin \left(\frac{πt}{2 {T}_{max}}\right)$

In equations (4) and (5), *w*(*t*) is the weight.

In step S4, the feature factors screened by the LightGBM algorithm from the testing sample set are selected to test the LightGBM-SSA-Transformer-XL model, thereby obtaining an optimal LightGBM-SSA-Transformer-XL model. In other words, the testing sample set is selected to test the Transformer-XL model with optimized hyperparameters to obtain the optimal Transformer-XL model.

In step S5, the environmental data inside and outside the greenhouse, the operational data of environmental regulation equipment, and crop physiological and ecological data are collected in real time and input into the optimal LightGBM-SSA-Transformer-XL model to predict the future dynamic variation trend of crop stem diameter. In other words, the environmental factor data inside and outside the greenhouse and crop intrinsic data are collected in real time, and the real-time data are input into the optimal LightGBM-SSA-Transformer-XL model to predict the future dynamic variation trend of crop stem diameter.

According to an embodiment of the present disclosure, in step S3, using the SSA algorithm to optimize hyperparameters of the Transformer-XL model includes steps S31 to S34.

In step S31, the parameters of the Salp Swarm Algorithm (SSA), including population size and maximum number of iterations.

In step S32, the hyperparameters of the Transformer-XL model are converted into the position coordinates of the salps, and the fitness value of each salp is calculated.

In step S33, the fitness values of the salps are sorted, the position of the optimal salp is taken as the position of the food source, the first a% of the salp chain is taken as leaders and the remaining (100-a)% is taken as followers, the positions of the salp leader and followers are updated respectively, where a% is less than 50%.

In step S34, steps S31 to S33 are repeated until the maximum number of iterations is reached, thereby obtaining optimal values of the number of encoder layers, batch size and learning rate of the Transformer-XL model.

In this embodiment, the improved Salp Swarm Algorithm is used to optimize the hyperparameters of the Transformer-XL model, such as the number of encoder layers, batch size, and learning rate.

In some specific embodiments of the present disclosure, the first 30% of the salp chain are designated as leaders and the remaining 70% are designated as followers, and the positions of the leaders and followers are updated. This improves decision-making efficiency and group cooperation, enabling the leaders to rapidly determine direction and strategy, reducing disagreements in the decision-making process, while the majority of followers focus on execution, thereby ensuring coordinated and consistent group behavior.

According to one embodiment of the present disclosure, in step S1, the sample dataset is divided into three dataset types based on seasonal changes and weather types: winter low-temperature high-humidity, summer high-temperature, and spring and autumn heat-preservation. That is, the sample dataset is divided into three dataset types based on seasonal changes and weather types: winter low-temperature high-humidity, summer high-temperature, and spring and autumn heat-preservation, and for each type, the dataset is further divided into a training set and a testing set. Such seasonal classification allows the model to focus on specific climatic conditions, improving its adaptability and prediction accuracy for each season.

In some specific embodiments of the present disclosure, the environmental data inside the greenhouse includes air temperature, air humidity, light intensity, photosynthetically active radiation, and carbon dioxide concentration. The environmental data outside the greenhouse includes outdoor air temperature, air humidity, photosynthetically active radiation, rainfall, and wind speed. The operational data of environmental regulation equipment includes equipment operation mode and operation time data. The crop physiological and ecological data include leaf temperature, leaf humidity, and stem diameter variation data. In this embodiment, by simultaneously selecting the above data, the variation in crop stem diameter growth can be predicted more accurately.

As shown in FIG. 1, the present disclosure further provides a system for coordinated regulation of greenhouse environment based on variation in crop stem diameter, including: a data acquisition module, a stem diameter variation prediction module, an environmental factor coordinated regulation module, and an equipment execution module. In other words, the system for coordinated regulation of greenhouse environment based on variation in crop stem diameter includes: a data acquisition module, a cloud platform service module, and an equipment execution module, the cloud platform service module includes a stem diameter variation prediction module and an environmental factor coordinated regulation module.

Specifically, the data acquisition module is configured to mainly collect environmental data inside and outside the greenhouse, operational data of environmental regulation equipment, and crop physiological and ecological data to construct a dataset. That is, the data acquisition module can acquire environmental data inside and outside the greenhouse, as well as crop growth data. The environmental factors inside the greenhouse mainly include air temperature, air humidity, light intensity, photoactive radiation, and carbon dioxide concentration; the environmental factors outside the greenhouse include air temperature, air humidity, light intensity, photoactive radiation, wind speed, wind direction, and rainfall. The equipment operation data include the operating status and operation time of the environmental regulation equipment. The crop physiological and ecological data include information on crop leaf temperature, leaf humidity, and stem diameter variation. By simultaneously using the above data, the variation in crop stem diameter can be predicted more accurately.

The cloud platform service module includes a stem diameter variation prediction module and an environmental factor coordinated regulation module. The stem diameter variation prediction module constructs a dynamic variation prediction model of crop stem diameter based on a dataset. The environmental factor coordinated regulation module constructs a target optimization function based on the dynamic variation prediction model of stem diameter, an optimal variation range of stem diameter within a fixed period, and environmental factor constraints, and obtains target values for coordinated regulation of air environmental factors inside the greenhouse by using a swarm optimization algorithm, thereby obtaining an operation strategy for the environmental regulation equipment.

Here, the cloud platform service module uses the Internet of Things, sensors and related technologies to process the collected data, such as technology transmission, storage and cleaning of massive data. Moreover, it can accurately and dynamically predict the short-term stem future diameter variation based on artificial intelligence algorithms. Using the stem diameter variation as the basis for regulation, the system constructs a target optimization function to obtain the coordinated regulation threshold for multiple environmental factors within a fixed crop growth cycle (e.g., one week), thereby generating an environmental regulation strategy.

The device execution module sends execution instructions to the regulation equipment in real time based on the generated environmental control strategy.

In other words, the present disclosure further provides a system for coordinated regulation of greenhouse environment based on variation in crop stem diameter, mainly including a data acquisition module, a cloud platform service module, and an equipment execution module. The system for coordinated regulation of greenhouse environment based on variation in crop stem diameter according to the embodiments of the present disclosure corresponds to the method in the above-mentioned embodiments, and is capable of realizing intelligent management and control of the crop growth environment, which will not be repeated herein.

Optionally, the cloud platform service module further includes a data storage and cleaning module, namely, the cloud platform service module includes a data storage and cleaning module, a stem diameter variation prediction module, and an environmental factor coordinated regulation module.

The method and system for coordinated regulation of greenhouse environment based on variation in crop stem diameter according to embodiments of the present disclosure are described in detail below in conjunction with specific examples.

### Example 1

In Example 1, tomatoes were selected as the crop. According to Example 1, the system for coordinated regulation of greenhouse environment based on variation in crop stem diameter is a crop growth-driven greenhouse environmental coordinated regulation system. The system includes a data acquisition module, a cloud platform service module, and an equipment execution module.

Example 1 specifically includes steps 1) to 4).

In step 1), environmental data inside and outside the greenhouse, operation data of environmental regulation equipment, and crop physiological and ecological data were collected within a predetermined time period.

In step 2), all the collected data are cleaned and processed, and the processed sample dataset is divided into three types according to seasonal changes and weather types: winter low-temperature high-humidity, summer high-temperature, and spring/autumn heat-preservation. For each type, the dataset is further divided into a training set and a testing set.

In step 3), a crop stem diameter variation prediction model (LightGBM-SSA-Transformer-XL model) were constructed, using the training and testing sets, based on a Light Gradient Boosting Machine (LightGBM), an improved Salp Swarm Algorithm (SSA), and a Transformer variant (Transformer-XL) model, respectively.

In step 4), a target optimization function is constructed based on the LightGBM-SSA-Transformer-XL model. A swarm intelligence optimization algorithm (second-generation non-dominated sorting genetic algorithm) is used to numerically solve the target function, obtaining the coordinated regulation target thresholds for the crop growth environmental parameters. Furthermore, based on the target values for the coordinated regulation of environmental parameters. In addition, an environmental regulation strategy is generated according to the current status of the environmental regulation equipment.

As can be seen, Example 1 provides a method for coordinated regulation of greenhouse environment based on variation in crop stem diameter. The variation in stem diameter growth is used as the core regulation indicator to form a set of crop growth-driven environmental parameter regulation strategies for greenhouse tomatoes, thereby realizing intelligent management and control of the crop growth environment.

The present disclosure further provides an electronic device 200, including: a processor 201 and a memory 202, wherein the memory 202 stores computer program instructions which, when executed by the processor 201, cause the processor 201 to perform the steps of the method in the above-mentioned embodiments.

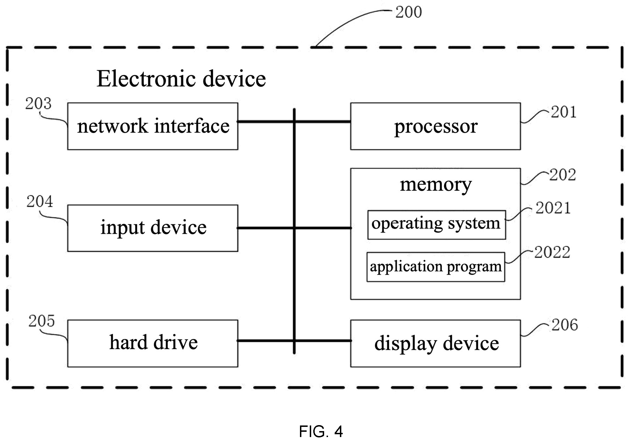

Furthermore, as shown in FIG. 4, the electronic device 200 further includes a network interface 203, an input device 204, a hard drive 205, and a display device 206.

The various interfaces and devices described above may be interconnected via a bus architecture. The bus architecture may include any number of interconnecting buses and bridges. Specifically, various circuits of one or more central processing units 201 (CPUs), represented by the processor 201, and one or more memories 202, represented by the memory 202, are connected together. The bus architecture may also connect various other circuits such as peripheral devices, voltage regulators, and power management circuits. It is understood that the bus architecture is used to implement communication between these components. In addition to the data bus, the bus architecture also includes a power bus, a control bus, and a status signal bus, which are well known in the art and therefore will not be described in detail herein.

The network interface 203 may connect to a network (such as the Internet, local area network, etc.), obtain relevant data from the network, and save it to the hard drive 205.

The input device 204 may receive various instructions input by the operator and send them to processor 201 for execution. The input device 204 may include a keyboard or clicking device (e.g., mouse, trackball, touchpad, or touch screen).

The display device 206 may display the results obtained by the processor 201 executing instructions.

The memory 202 is configured to store the programs and data necessary for the operation of the operating system 2021, as well as intermediate results and other data during the calculation process of the processor 201.

It is understood that the memory 202 in the embodiments of the present disclosure may be volatile memory or non-volatile memory, or may include both volatile and non-volatile memory. The non-volatile memory may be read-only memory (ROM), programmable read-only memory (PROM), erasable programmable read-only memory (EPROM), electrically erasable programmable read-only memory (EEPROM), or flash memory. The volatile memory may be random access memory (RAM), which is used as an external cache. The memory 202 of the apparatus and methods described herein is intended to include, but is not limited to, these and any other suitable types of memory 202.

In some implementations, the memory 202 stores elements such as executable modules or data structures, or subsets thereof, or extended sets thereof: the operating system 2021 and the application program 2022.

The operating system 2021 includes various system programs, such as the framework layer, core library layer, and driver layer, used to implement various basic business functions and handle hardware-based tasks. The application program 2022 includes various applications, such as a browser, configured to implement various application functions. Programs implementing the methods of the present disclosure embodiment may be included in the application program 2022.

When the processor 201 calls and executes the application program 2022 and data stored in the memory 202, specifically the program or instructions stored in the application program 2022, it executes the steps of the method according to the above-mentioned embodiment.

The method described in the above-mentioned embodiments of the present disclosure may be applied to or implemented by the processor 201. The processor 201 may be an integrated circuit chip with signal processing capabilities. In implementation, each step of the above method may be completed by the integrated logic circuit of the hardware in the processor 201 or by instructions in software form. The processor 201 may be a general-purpose processor, digital signal processor (DSP), application-specific integrated circuit (ASIC), off-the-shelf programmable gate array (FPGA), or other programmable logic device, discrete gate or transistor logic device, or discrete hardware component, and can implement or execute the methods, steps, and logic block diagrams disclosed in the embodiments of the present disclosure. The general-purpose processor may be a microprocessor or the processor 201 may be any conventional processor 201, etc. The steps of the methods disclosed in the embodiments of the present disclosure can be directly embodied in the execution of a hardware decoding processor, or executed by a combination of hardware and software modules in the decoding processor. The software modules may be located in random access memory, flash memory, read-only memory, programmable read-only memory, electrically erasable programmable memory, registers, or other mature storage media in the art. The storage medium is located in the memory 202. The processor 201 reads the information in the memory 202 and, in conjunction with its hardware, completes the steps of the above method.

It is understood that the embodiments described herein can be implemented in hardware, software, firmware, middleware, microcode, or a combination thereof. For hardware implementation, the processing unit can be implemented in one or more application-specific integrated circuits (ASICs), digital signal processors (DSPs), digital signal processing devices (DSPDs), programmable logic devices (PLDs), field-programmable gate arrays (FPGAs), general-purpose processors, controllers, microcontrollers, microprocessors, other electronic units for performing the functions of the present disclosure, or combinations thereof.

For software implementation, the techniques described herein can be implemented through modules (e.g., procedures, functions, etc.) that perform the functions described herein. The software code may be stored in the memory 202 and executed by the processor 201. The memory 202 may be implemented in the processor 201 or external to the processor 201.

Specifically, the processor 201 is also configured to read computer programs and perform the following steps: the method predicts and outputs the answer to the question asked by the user.

This disclosure further provides a computer-readable storage medium storing a computer program which, when executed by a processor 201, causes the processor 201 to perform the steps of the methods described in the above-mentioned embodiments.

In the several embodiments provided in the present disclosure, it should be understood that the disclosed methods and apparatus can be implemented in other ways. For example, the apparatus embodiments described above are merely illustrative; for instance, the division of units is only a logical functional division, and in actual implementation, there may be other division methods. For example, multiple units or components may be combined or integrated into another system, or some features may be ignored or not executed. Furthermore, the coupling or direct coupling or communication connection shown or discussed may be through some interfaces; the indirect coupling or communication connection between devices or units may be electrical, mechanical, or other forms.

Furthermore, the functional units in the various embodiments of the present disclosure can be integrated into one processing unit, or each unit can be physically comprised separately, or two or more units can be integrated into one unit. The integrated unit can be implemented in hardware or in the form of hardware plus software functional units.

The integrated units implemented as software functional units described above can be stored in a computer-readable storage medium. These software functional units, stored in a storage medium, include several instructions to cause a computer device (which may be a personal computer, server, or network device, etc.) to execute some steps of the transmission and reception methods of the various embodiments of the present disclosure. The aforementioned storage medium includes various media capable of storing program code, such as USB flash drives, portable hard drives, read-only memory (ROM), random access memory (RAM), magnetic disks, or optical disks.

While specific embodiments of the present disclosure have been described in detail by way of example, those skilled in the art should understand that the examples are for illustrative purposes only and not intended to limit the scope of the present disclosure. Those skilled in the art should understand that modifications can be made to the above embodiments without departing from the scope and spirit of the present disclosure. The scope of the present disclosure is defined by the appended claims.

## Claims

1. A method for coordinated regulation of greenhouse environment based on variation in crop stem diameter, **characterized in that** it comprises the following steps:
collecting environmental data inside the greenhouse, environmental data outside the greenhouse, operational data of environmental regulation equipment, and crop physiological and ecological data to construct a dataset;
constructing a dynamic variation prediction model of crop stem diameter based on the dataset; and
constructing a target optimization function based on the dynamic variation prediction model of stem diameter, an optimal variation range of stem diameter within a fixed period, and environmental factor constraints, and obtaining target values for coordinated regulation of air environmental factors inside the greenhouse by using a swarm optimization algorithm, thereby obtaining an operation strategy of the environmental regulation equipment.

2. The method for coordinated regulation of greenhouse environment based on variation in crop stem diameter according to claim 1, wherein the dynamic variation prediction model of crop stem diameter is constructed by using an intelligent learning method that combines an improved SSA algorithm with Transformer-XL.

3. The method for coordinated regulation of greenhouse environment based on variation in crop stem diameter according to claim 1 or 2, wherein the dynamic variation prediction model of crop stem diameter is a LightGBM-SSA-Transformer-XL model, and constructing the dynamic variation prediction model of crop stem diameter includes the following steps:
S1, dividing a sample dataset into multiple dataset types according to preset environmental change rules, and for each type, dividing the sample dataset into a training sample set and a testing sample set;
S2, performing feature extraction on input parameter variables of the training sample set by using a LightGBM algorithm, and screening for feature factors that affect the growth rate of crop stem diameter;
S3, constructing a Transformer-XL model based on the feature factors screened from the training sample set by the LightGBM algorithm, and optimizing hyperparameters of the Transformer-XL model by using an SSA algorithm to obtain the LightGBM-SSA-Transformer-XL model;
S4, selecting the feature factors screened from the testing sample set by the LightGBM algorithm, and testing the LightGBM-SSA-Transformer-XL model to obtain an optimal LightGBM-SSA-Transformer-XL model; and
S5, collecting, in real time, the environmental data inside the greenhouse, the environmental data outside the greenhouse, the operational data of environmental regulation equipment, and the crop physiological and ecological data, and inputting the collected data into the optimal LightGBM-SSA-Transformer-XL model to predict a future dynamic variation trend of crop stem diameter.

4. The method for coordinated regulation of greenhouse environment based on variation in crop stem diameter according to any one of claims 1-3, wherein in step S3, optimizing hyperparameters of the Transformer-XL model by using an SSA algorithm includes the following steps :
S31, initializing SSA parameters, including a population size and a maximum number of iterations;
S32, converting the hyperparameters of the Transformer-XL model into position coordinates of salps, and calculating a fitness value of each salp;
S33, sorting the fitness values of the salps, taking the position of an optimal salp as a position of a food source, designating the first a% of a salp chain as leaders and the remaining (100-a)% as followers, and updating positions of the salp leaders and the salp followers respectively, where a% is less than 50%; and
S34, repeating steps S31 to S33 until the maximum number of iterations is reached, thereby obtaining optimal values of the number of encoder layers, batch size, and learning rate of the Transformer-XL model.

5. The method for coordinated regulation of greenhouse environment based on variation in crop stem diameter according to any one of claims 1-4, wherein the first 30% of the salp chain are designated as the leaders and the remaining 70% are designated as the followers, and the positions of the salp leaders and the salp followers are updated respectively.

6. The method for coordinated regulation of greenhouse environment based on variation in crop stem diameter according to any one of claims 1-5, wherein in step S1, the sample dataset is divided into three dataset types based on seasonal changes and weather types: winter low-temperature high-humidity, summer high-temperature, and spring/autumn heat-preservation.

7. The method for coordinated regulation of greenhouse environment based on variation in crop stem diameter according to any one of claims 1-6, wherein the environmental data inside the greenhouse includes air temperature, air humidity, light intensity, photosynthetically active radiation, and carbon dioxide concentration; the environmental data outside the greenhouse includes outdoor air temperature, air humidity, photosynthetically active radiation, rainfall, and wind speed; the operational data of environmental regulation equipment includes equipment operation mode and operation time data; and the crop physiological and ecological data include leaf temperature, leaf humidity, and stem diameter variation data.

8. A system for coordinated regulation of greenhouse environment based on variation in crop stem diameter, comprising:
a data acquisition module, configured to collect environmental data inside the greenhouse, environmental data outside the greenhouse, operational data of environmental regulation equipment, and crop physiological and ecological data to construct a dataset;
a cloud platform service module, including a stem diameter variation prediction module and an environmental factor coordinated regulation module, wherein the stem diameter variation prediction module constructs a dynamic variation prediction model of crop stem diameter based on the dataset, and the environmental factor coordinated regulation module constructs a target optimization function based on the dynamic variation prediction model of stem diameter, an optimal variation range of stem diameter within a fixed period, and environmental factor constraints, and obtains target values for coordinated regulation of air environmental factors inside the greenhouse using a swarm optimization algorithm, thereby obtaining an operation strategy for the environmental regulation equipment; and
an equipment execution module, configured to send an execution instruction in real time to the regulation equipment based on the generated environmental regulation strategy.

9. An electronic device, comprising a processor and a memory, wherein the memory stores computer program instructions which, when executed by the processor, cause the processor to perform the method of any one of claims 1-7.

10. The electronic device according to claim 9, further comprising a computer-readable storage medium for the electronic device, the computer-readable storage medium storing a computer program, which, when executed by a processor, causes the processor to perform the method of any one of claims 1-7.
